Europäisches Patentamt

(19) European Patent Office

Office européen des brevets

(11) Publication number: **0 100 635**
**A1**

## EUROPEAN PATENT APPLICATION

(21) Application number: 83304270.8

(22) Date of filing: 22.07.83

(51) Int. Cl.³: **G 01 N 1/24**

(30) Priority: 29.07.82 GB 8221903

(43) Date of publication of application:
15.02.84 Bulletin 84/7

(84) Designated Contracting States:
CH DE FR GB IT LI

(71) Applicant: HONEYBOURNE PUMPS LIMITED
Dawkins Road Hamworthy Trading Estate
Poole Dorset(GB)

(72) Inventor: Beeson, Samuel Neville
Honeybourne Blandford Road
Corfe Mullen Wimborne Dorset(GB)

(74) Representative: Shindler, Nigel et al,
BATCHELLOR, KIRK & EYLES 2 Pear Tree Court
Farringdon Road
London EC1R 0DS(GB)

(54) Tape feed mechanism.

㊗ A tape feed mechanism particularly suitable for an air or gas sampling device in which the tape is to be driven in a stepwise fashion, so that air or gas to be tested can be passed through the tape when it is stationary. The feed mechanism comprises a cam (12) arranged in a fixed support block (2), and an idler roller (14) mounted in a movable support block (4) so as to face the cam 12. The movable support block (4) is resiliently urged towards the fixed support block (2) by means of a spring (16) so that when the cam (12) is rotated, the tape is engaged by the cam (12) and roller (14) and is driven as long as a high profile portion of the cam (12) faces the roller (14). When a low profile portion of the cam (12) faces the roller (14), the movable support block (4) is able to move to a position closer to the fixed block (2) so that cooperating sealing means on each block grip the tape, holding it in position in the path of an air sampling passage formed in the blocks (2, 4).

FIG.2.

EP 0 100 635 A1

TAPE FEED MECHANISM

This invention relates to a feed mechanism for continuous tape, which is particularly suitable for driving a tape of filter paper through an air or gas sampling device.

In one known type of air sampling system, air is sampled to determine the content of toxic or polluting substances by passing a stream of the air to be tested through a porous membrane, such as a filter paper, for a predetermined period of time. At the end of that period of time, the degree of pollution, or the nature of the pollutant, can be determined by examining the filter paper, or more rigorously by testing its opacity using photoelectric detectors (for example).

Since a fresh piece of filter paper must be used for each test, it is desirable to provide a simple but robust mechanism for feeding a continuous length of such filter paper in a series of steps through the sampling point.

Accordingly, the present invention provides a feed mechanism for driving a continuous tape in a stepwise fashion, comprising a driven cam mounted on a first support means and having its axis arranged transversely to the direction in which the tape is to be moved, an idler roller mounted on a second support means so as to face the cam with its axis parallel to the axis of the cam, resilient means for biasing the two support means and thus the roller and cam, towards one another, and drive control means for rotating the cam in a series of steps the two support means having co-operating means for gripping the tape and holding the cam and roller out of mutual engagement when a low profile portion of the cam is facing the roller but allowing them to engage when a high profile portion of the cam is facing the roller, whereby, in use, the tape is held between a high portion of the cam and the idler roller so as to be driven along the desired path, as the cam is rotated, until the cam has rotated to a position in which a low profile portion is facing the roller, when the tape is released by the cam and is held in a fixed position by the said co-operating means.

Preferably, the cam has two low profile portions, arranged 180° apart around its circumference so that the length of the surface between them determines the length of tape which is moved each time the cam is rotated through 180°. Preferably, the cam is recessed at the position of the or each low profile portion so as to provide a guide for the edges of the tape without pressing it against the roller.

Preferably, in an embodiment of the invention adapted for driving an air sampling filter tape, there is provided an air sample passage which extends through the support means in a direction perpendicular to, and intersecting, the plane of the tape, the means for gripping the tape comprises co-operating sealing means at the junction of the portion of the passage in the first support means and the passage in the second support means, so that, when the low profile portion of the cam is facing the roller and the first and second support means are in their closest adjacent positions, the sealing means will grip the tape in position across the passage at the said junction.

One embodiment of the invention will now be described by way of example, with reference to the accompanying drawings, in which:-

Figure 1 is a side elevation of a tape transport mechanism in an air sampling device, in an initial position;

Figures 2, 3 and 4 are views similar to that of Figure 1, showing the drive mechanism in different successive positions of its movement;

Figures 5, 6 and 7 are cross-sectional views of the device as shown in Figures 1, 2 and 3, respectively, and

Figure 8 is a diagrammatic view of a drive motor for the mechanism of Figure 1.

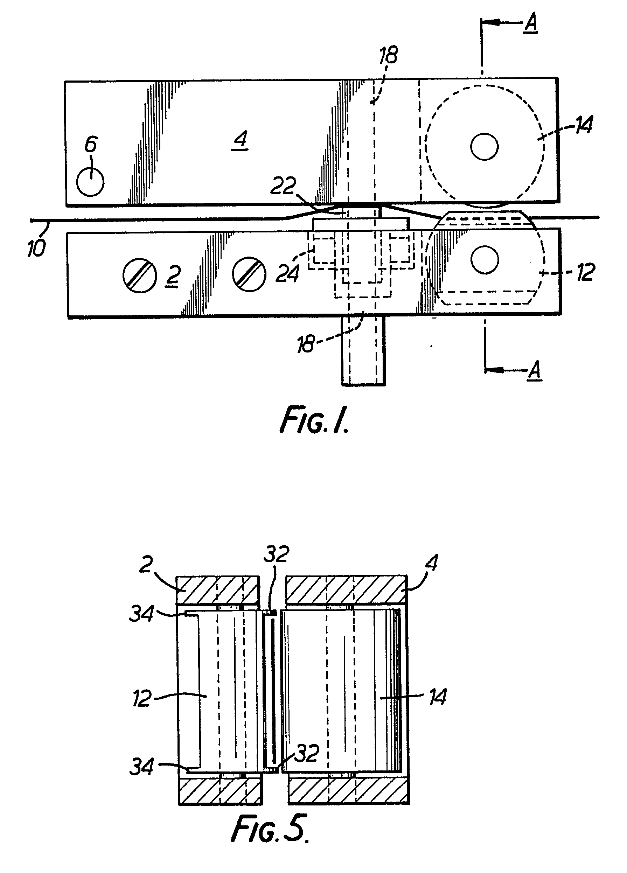

The mechanism of Figure 1 includes a first support means comprising a fixed block 2, and a second support means, formed by a movable block 4, mounted above the block 2 for pivotal movement about a fixed shaft 6 close to one end. A tape of filter paper 8 passes through the gap 10 between the two blocks from a feed spool to a take-up spool (not shown).

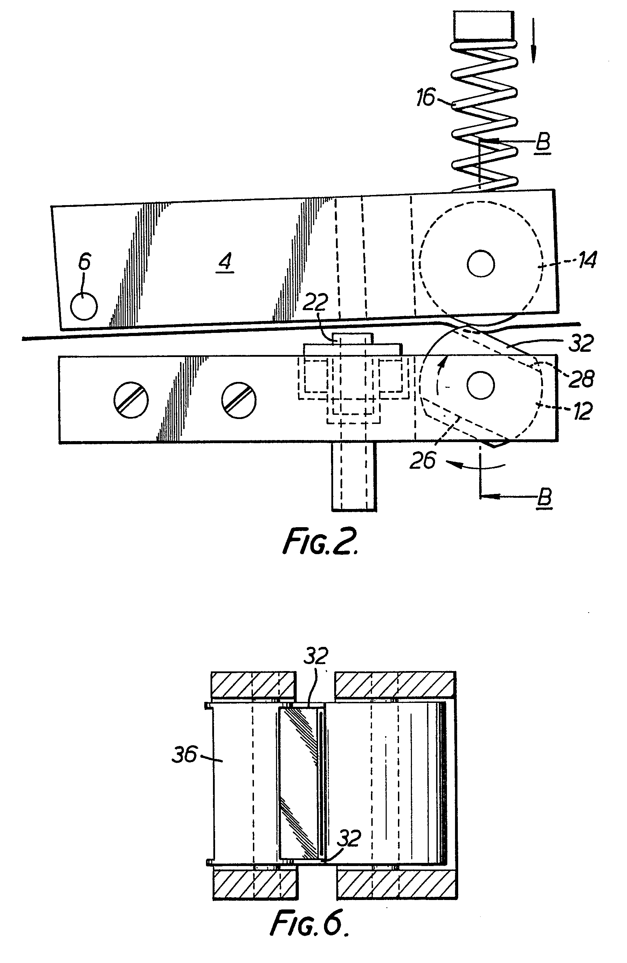

A specially profiled drive roller or cam 12 is mounted in the fixed block 2 and is driven by an electric motor, as explained in more detail below. A co-operating idler roller 14 is mounted in the movable block, the arrangement being such that, when one of the "high" regions of the cam 12 is opposite the roller 14, the cam and the roller will be held in engagement by means of a spring 16 acting on the movable block 4, so that it tends to pivot in a clockwise direction about the pivot axis 6, as shown in Figure 2.

An air passage 18 passes through the fixed block 2 and the movable block 4 so as to intersect the path of the paper tape 10, and a sealing device 20, comprising a PTFE sealing ring 22, and a silicone rubber cushion 24, are mounted in a counterbored recess at the inner end of the passage 18 in the fixed block. Thus, when the fixed block and movable block are in their closest positions, as shown in Figure 1, the filter paper is held in position across the junction of the two portions of the passage 18 by the engagement of the sealing ring against the end of the passage 18 in the movable block.

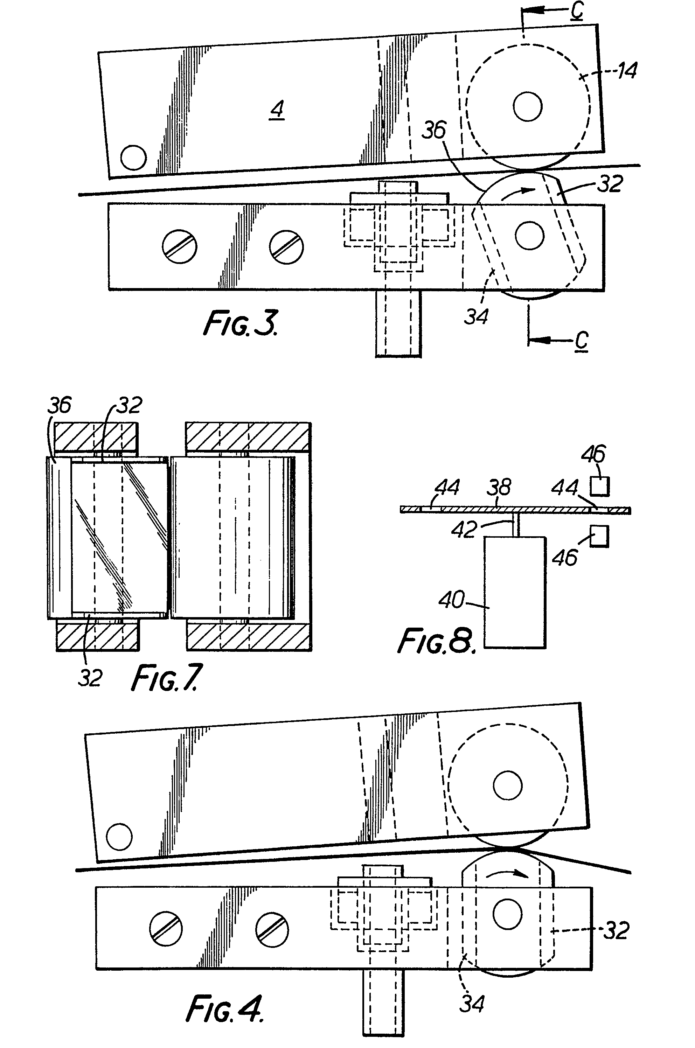

The cam 12 is formed with a pair of flats 26, 28 at positions 180° away from one another, which extend almost to the axial ends of the cam and terminate in shallow end walls indicated, for example, at 32 and 34 in Figure 3. Thus, it can be seen that, in the position shown in Figure 1, the end walls are almost in engagement with the roller 14, whilst the tape passes loosely through the recess between the end walls formed by the flat, as shown more clearly in the sectional view of Figure 5.

The position of the mechanism shown in Figure 1, is the position in which an air sample is taken by pumping air through the passage 18 for a predetermined length of time so that it passes through the portion of filter paper 10 which is sealed across the passage by the sealing ring 22. Subsequently, when the filter paper has been fed out of the mechanism, the relevant area can be examined and/or tested to determine the degree of pollution.

When the tape is to be moved to the next test position, the driven cam 12 is rotated in a clockwise direction, as shown in Figure 2. In the initial (Figure 1) position, the engagement of the sealing ring 22 and the movable block 4 holds the idler roller 14 just clear of the edges 32 of the driven cam 12 (e.g. as shown in Figure 5), and, accordingly, when rotation begins, the cam is able to rotate through an angle of about 30$^{\circ}$ before the ends of the upper edges of the two walls 32 engage with the adjacent axial ends of the surface of the roller 14, as shown in Figure 2. When this engagement occurs, the roller 14 and the movable block 4 are urged upwardly against the action of the spring 16, so that the block 4 is disengaged from the sealing ring 22. The tape 10 is, therefore, released and, as the cam 12 rotates further in a clockwise direction, as shown in Figure 3, the curved region 36 of the cam engages the roller 14, gripping the tape 10 so that it is pulled through the mechanism for a distance which is fixed by the length of the arc 36. At the same time, the block 4 is, of course, held out of engagement with the sealing ring 22. Rotation of the cam is continued, as shown in Figure 4, until the other recess 26 of the cam is opposite the roller 14, with the block 4 again lowered into position to engage the tape against the sealing ring 22 ready for the next sample to be taken.

The rotation of the cam is preferably achieved by means of an electric motor to which a pulse is applied each time the tape is to be stepped to the next sampling position. The motor may be stopped in each successive sampling position by any suitable position detecting means, for example, an electro-mechanical switch, such as a micro switch. One preferred form of position detecting arrangement is shown in Figure 8, in which a disc 38 is mounted on the drive shaft 42 of a motor 40, and has a pair of diametrically opposed holes 44 near its circumference. The disc is made of steel so that the positions of the holes, which are arranged to coincide with the sampling positions of the mechanism, can be detected by the magnetic sensors 46 of a Hall-effect switch which controls the supply of current to the motor 40. The arrangement is such that the application of a pulse to the control circuit causes the motor to rotate from the position shown, through 180° until the opposite hole 44 is adjacent the detectors 46.

CLAIMS:

1.      A feed mechanism for driving a continuous tape (10) in a stepwise fashion, comprising a driven cam (12) mounted on a first support means (2) and having its axis arranged transversely to the direction in which the tape is to be moved, an idler roller (14) mounted on a second support means so as to face the cam with its axis parallel to the axis of the cam, resilient means (16) for biasing the two support means and thus the roller and cam, towards one another, and drive control means for rotating the cam in a series of steps; the two support means having cooperating means (22) for gripping the tape and holding the cam and roller out of mutual engagement when a low profile portion (26, 28) of the cam is facing the roller, but allowing them to engage when a high profile portion (36) of the cam is facing the roller, whereby, in use, the tape is held between a high portion of the cam and the idler roller so as to be driven along the desired path, as the cam is rotated, until the cam has rotated to a position in which a low profile portion is facing the roller, when the tape is released by the cam and is held in a fixed position by the said cooperating means.

2.      A feed mechanism according to claim 1 in which the two support means comprise a pair of elongate blocks mounted in a generally parallel relationship, the first block being fixed and the second block being pivotally mounted about one end and urged towards the fixed block by means of a spring.

3.      A feed mechanism according to claim 1 or claim 2 in which the cam has two low profile portions, arranged 180° apart around its circumference so that the length of the surface between them determines the length of tape which is moved each time the cam is rotated through 180°.

4.      A feed mechamism according to any of claims 1 to 3 in which the cam is recessed at the position of the or each low profile portion so as to provide a guide for the edges of the tape without pressing it against the roller.

5.      An air or gas sampling device including a feed mechanism for an air sampling tape, the feed mechanism being constructed and arranged in accordance with any one of the preceding claims.

6.      An air or gas sampling device according to claim 5 including an air sample passage which extends through the support means in a direction perpendicular to, and intersecting, the plane of the tape, the means for gripping the tape comprising cooperating sealing means at the junction of the portion of the passage in the first support means and the passage in the second support means, so that, when the low profile portion of the cam is facing the roller and the first and second support means are in their closest adjacent positions, the sealing means will hold the tape in position across the passage at the said junction.

FIG. 1.

FIG. 5.

FIG.2.

FIG.6.

FIG.3.

FIG.7.

FIG.8.

FIG.4.

0100635

## EUROPEAN SEARCH REPORT

**European Patent Office**

Application number

EP 83 30 4270

## DOCUMENTS CONSIDERED TO BE RELEVANT

| Category | Citation of document with indication, where appropriate, of relevant passages | Relevant to claim |
|---|---|---|
| X | US-A-3 654 801 (R.D. KEEFER et al.) * Claims 1, 2 * | 1 |
| A | US-A-4 144 454 (E.F. GROH et al.) | |
| A | DE-C- 639 177 (G. REYE) | |

**CLASSIFICATION OF THE APPLICATION (Int. Cl. 3)**

G 01 N 1/24

**TECHNICAL FIELDS SEARCHED (Int. Cl. 3)**

G 01 N 1/22

The present search report has been drawn up for all claims

| Place of search | Date of completion of the search | Examiner |
|---|---|---|
| BERLIN | 05-10-1983 | SCHWARTZ K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82